# EUROPEAN PATENT APPLICATION

(11) **EP 4 715 237 A1**
(43) Date of publication of application: **25.03.2026**
(21) Application number: 24201110.4
(22) Date of filing: 18.09.2024
(51) Int. Cl.: F16H 3/44

(54) **AN ELECTRIC POWERTRAIN FOR A VEHICLE**

(71) Applicant: VOLVO TRUCK CORPORATION, 405 08 Göteborg (SE)
(72) Inventor: NORBERG, Sven, 422 47 HISINGS BACKA (SE)
(74) Representative: Kransell & Wennborg KB

(57) **Abstract**

An electric powertrain (200) for a vehicle, comprising an electric machine (10), a transmission (220), and at least one drive shaft (90L), the transmission comprising:
- first and second planetary gear systems (250, 260), wherein at least one of a second sun gear (261) and a second ring gear (264) is rotationally connected or connectable to a first planet gear carrier (252),
- a primary reduction gear set (230) drivingly connecting the electric machine to the first planetary gear system,
one of the first and second planetary gear systems (250) being shiftable to any one of two reducing gear states, and
the other one of the first and second planetary gear systems (260) being shiftable to any one of a gear state with a direct gear ratio and a reducing gear state,
a primary reduction gearwheel (232) and the planetary gear systems being coaxial with the drive shaft.

## Description

### TECHNICAL FIELD

The disclosure relates generally to electric vehicles. In particular aspects, the disclosure relates to an electric powertrain for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In recent years, there has been a trend in the transport industry towards developing powertrains with at least one electric prime mover, i.e., with at least one electric motor for propulsion of the vehicle. To reduce power losses and to free up space for mounting batteries for powering the electric motor, it is desirable to have the electric motor provided as close as possible to the driven wheels of the vehicle, such as directly on a driven wheel axle. Such a powertrain configuration is often referred to as an electric axle, or E-axle, configuration.

Powertrains for electric heavy-duty vehicles, such as for E-axles, typically need to be compact to provide enough space for batteries and other components. The transmission of such a powertrain further needs to provide a wide range of gear reduction ratios to ensure startability as well as efficiency at cruising speeds. There is therefore a strive to develop electric powertrains that are both compact and that can provide a sufficiently large range of gear ratios.

### SUMMARY

According to a first aspect of the disclosure, an electric powertrain for a vehicle is provided, comprising at least a first electric machine, a transmission, and a driven axle comprising at least a first drive shaft. The transmission comprises:
- a first planetary gear system comprising a first sun gear, a first ring gear, and a first planet gear carrier carrying a first set of planet gears;
- a second planetary gear system comprising a second sun gear, a second ring gear, and a second planet gear carrier carrying a second set of planet gears, wherein at least one of the second sun gear and the second ring gear is rotationally connected to, or rotationally connectable to, the first planet gear carrier;
- a primary reduction gear set configured to drivingly connect the first electric machine to the first planetary gear system, the primary reduction gear set comprising a first pinion arranged in meshing engagement with a primary reduction gearwheel.
One of the first and second planetary gear systems is shiftable to any one of at least two gear states, including two different gear states with reducing gear ratios. The other one of the first and second planetary gear systems is shiftable to any one of two gear states, including one gear state with a direct gear ratio and one gear state with a reducing gear ratio. The primary reduction gearwheel and the first and second planetary gear systems are coaxial with the first drive shaft.

The first aspect of the disclosure may seek to provide an in at least some aspect improved electric powertrain for a vehicle. In particular, it may seek to provide such a powertrain which is compact, and which can provide a sufficient range of gear ratios to ensure startability as well as efficiency at cruising speed for a heavy-duty vehicle. A technical benefit may include the provision of at least four gear states by the two planetary gear systems, each being shiftable to any one of, at least, two gear states. Furthermore, a compact transmission may be achieved thanks to the speed reduction in at least two steps: one reduction over the primary reduction ger set, and one selectable reduction over one of the planetary gear systems. By using the planet gear carriers as output gears from the first and second planetary gear systems, respectively, a change in rotational direction over the planetary gear systems is avoided. Loads on gear teeth and bearings may be reduced by using the planet gear carriers as output gears, contributing to relatively low power losses and robustness of the transmission.

The first and second planetary gear systems are coaxial, but may be axially separated from one another.

By the term "rotationally connected to" is intended "permanently connected for common rotation with". By the term "rotationally connectable to" is intended "selectively connectable for common rotation with". The terms "engaged to" and "engageable to" are used in the same way. Hence, a component which is engaged to a fixed member of the transmission cannot rotate relative to the fixed member.

By a "driving connection" of two rotating parts is herein intended that torque can be transmitted between the parts, and that the rotational speeds of the parts are proportional. When two rotating parts are drivingly connected, torque can be transmitted between the parts. This may be achieved by two gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel, etc. Thus, in order to be drivingly connected, it is not necessary that two rotating parts are in meshing engagement. It is sufficient that the rotation of one of the parts inevitably leads to the rotation of the other one of the parts. When two parts are drivingly connectable, they are selectively connectable such that torque can be transmitted between the parts.

By a "meshing engagement" is intended a permanent meshing engagement.

Optionally in some examples, including in at least one preferred example, each one of the first and second ring gears is engageable to a fixed member of the transmission. A technical benefit may include good startability with relatively large speed reduction over both planetary gear systems.

Optionally in some examples, including in at least one preferred example, the first ring gear is further rotationally connectable to the primary reduction gearwheel. A technical benefit may include improved torque transmission efficiency at cruising speeds by using the first ring gear for torque transfer.

Optionally in some examples, including in at least one preferred example, the first ring gear is configured to be axially movable between a first engaged position in which it engages the fixed member, and a second engaged position in which it engages the primary reduction gearwheel. A technical benefit may include a relatively compact transmission in which a separate sleeve is not needed for engaging the first ring gear with the fixed member and the primary reduction gearwheel, respectively.

Optionally in some examples, including in at least one preferred example, the second ring gear is further rotationally connectable to the first planet gear carrier. This enables selective use of the second ring gear as an input gear of the second planetary gear system, either on its own or together with the second sun gear, depending on the configuration of the planetary gear systems.

Optionally in some examples, including in at least one preferred example, the second ring gear is configured to be axially movable between a first engaged position in which it engages the fixed member, and a second engaged position in which it engages the first planet gear carrier. A technical benefit may include a relatively compact transmission in which a separate sleeve is not needed for engaging the second ring gear with the fixed member and the first planet gear carrier, respectively.

Optionally in some examples, including in at least one preferred example, one of the first and second sun gears is engageable to a fixed member of the transmission, and the other one of the first and second sun gears is rotationally connected to another component of the transmission. When the first sun gear is engageable to the fixed member, the second sun gear may be rotationally connected to, i.e., permanently engaged for common rotation with, the first planet gear carrier. When the second sun gear is engageable to the fixed member, the first sun gear may be rotationally connected to the primary reduction gearwheel. A technical benefit of providing one permanently engaged sun gear may include reduced complexity and enhanced durability of the transmission.

Optionally in some examples, including in at least one preferred example, the first sun gear is rotationally connectable to the primary reduction gearwheel, and the first sun gear is further engageable to a fixed member of the transmission. Hence, the first sun gear may be shiftable between two gear states, while the second sun gear is permanently rotationally connected to the first planet gear carrier. A technical benefit may include a lighter and less complex transmission in comparison with a configuration in which the second sun gear is shiftable.

Optionally in some examples, including in at least one preferred example, the first sun gear is configured to be axially movable between a first engaged position in which it engages the fixed member, and a second engaged position in which it engages the primary reduction gearwheel. A technical benefit may include a relatively compact transmission in which a separate sleeve is not needed for engaging the first sun gear with the fixed member and the primary reduction gearwheel, respectively.

Optionally in some examples, including in at least one preferred example, the second sun gear is rotationally connected to the first planet gear carrier. Hence, the second sun gear is permanently connected for common rotation with the first planet gear carrier. A technical benefit may include a lighter and less complex transmission in comparison with a configuration in which the second sun gear is shiftable.

Optionally in some examples, including in at least one preferred example, the transmission is shiftable to one of at least four gear states with different gear ratios. A technical benefit may include enhanced versatility in powertrain performance and energy efficiency in comparison with transmissions providing three different gear ratios.

Optionally in some examples, including in at least one preferred example, the at least four gear states comprise:
- a first gear state in which the first ring gear is engaged to a fixed member of the transmission, the first sun gear is engaged to the primary reduction gearwheel, and the second ring gear is engaged to the fixed member,
- a second gear state in which the first ring gear is engaged to the primary reduction gearwheel, the first sun gear is engaged to the fixed member, and the second ring gear is engaged to the fixed member,
- a third gear state in which the first ring gear is engaged to the fixed member, the first sun gear is engaged to the primary reduction gearwheel, and the second ring gear is engaged to the first planet gear carrier, and
- a fourth gear state in which the first ring gear is engaged to the primary reduction gearwheel, the first sun gear is engaged to the fixed member, and the second ring gear is engaged to the first planet gear carrier.

A technical benefit may include the provision of gear ratios within a range spanning from a relatively large speed reduction in the first gear state, providing startability, and a relatively small speed reduction in the fourth gear state, enabling low power losses at cruising speeds.

Optionally in some examples, including in at least one preferred example, only one of the planetary gear systems is configured to be selectively rotationally locked to provide a direct gear ratio. A technical benefit may include a more robust transmission, which is easier to lubricate than one in which both planetary gear systems are shiftable to a direct gear ratio.

Optionally in some examples, including in at least one preferred example, the first pinion is arranged on an output shaft of the first electric machine. In other words, the first pinion is coaxial with the output shaft of the first electric machine. The first pinion may be either rotationally connected to, or rotationally connectable to, the output shaft of the first electric machine. A technical benefit may include relatively small power losses between the electric machine and the planetary gear systems thanks to the single gear mesh in the primary reduction gear set.

Optionally in some examples, including in at least one preferred example, the first pinion is rotationally connectable to the output shaft of the first electric machine. A technical benefit may include a simple disconnection of the first electric machine from the axle, such as in connection with towing.

Optionally in some examples, including in at least one preferred example, an output shaft of the first electric machine is parallel with the first drive shaft. A technical benefit may include the omission of a bevel gear, hence resulting in a more robust powertrain which is less sensitive to misalignments, easier to lubricate, and with lower noise levels. The first electric machine may be positioned such that it is offset from the first drive shaft in a transverse direction, but such that it axially overlaps with at least one of the planetary gear systems. For example, a normal plane through one of the planetary gear systems may pass through a stator of the first electric machine.

Optionally in some examples, including in at least one preferred example, the driven axle further comprises:
- a second drive shaft coaxial with the first drive shaft, and
- a differential gear set configured to distribute torque to the first and second drive shafts.

A technical benefit may include balanced torque distribution between drive shafts, enhancing vehicle stability and handling.

Optionally in some examples, including in at least one preferred example, the second planet gear carrier is rotationally connected to a differential planet carrier of the differential gear set. A technical benefit may include efficient torque distribution from the transmission to the driven axle.

Optionally in some examples, including in at least one preferred example, a second electric machine is drivingly connected to, or drivingly connectable to, the first planetary gear system via a second pinion arranged in meshing engagement with the primary reduction gearwheel. A technical benefit may include enabling dual-motor operation for improved power delivery and flexibility in vehicle performance.

According to a second aspect of the disclosure, a vehicle comprising the electric powertrain of the first aspect is provided. The vehicle may be a heavy-duty vehicle such as a truck, a bus, or a construction machine. The second aspect of the disclosure may seek to provide an in at least some aspect improved electric vehicle. Technical benefits and advantages correspond to those described in connection with the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings. The drawings are schematic and are not necessarily drawn to scale. Like reference numbers refer to like elements throughout the description, unless expressed otherwise.
**FIG. 1** is an exemplary vehicle according to an example.
**FIG. 2** is a schematic illustration of an exemplary powertrain according to a first example.
**FIG. 3** illustrates the powertrain shown in FIG. 2 in a first gear state.
**FIG. 4** illustrates the powertrain shown in FIG. 2 in a second gear state.
**FIG. 5** illustrates the powertrain shown in FIG. 2 in a third gear state.
**FIG. 6** illustrates the powertrain shown in FIG. 2 in a fourth gear state.
**FIG. 7** is a schematic illustration of an exemplary powertrain according to a second example.
**FIG. 8** is a schematic illustration of an exemplary powertrain according to a third example.

### DETAILED DESCRIPTION

The detailed description set forth below provides information and examples of the disclosed technology with sufficient detail to enable those skilled in the art to practice the disclosure.

An electric heavy-duty vehicle may be driven by one or more electric prime movers, i.e., electric motors. When a single electric motor is provided, it may be positioned similarly as an internal combustion engine of a traditional vehicle. However, to reduce overall power losses and to free up space for mounting batteries for powering the electric motor, it is often desirable to mount the electric motor as close as possible to the driven wheels of the vehicle, such as directly on a driven wheel axle. Such a powertrain configuration is often referred to as an electric axle, or E-axle, configuration. An E-axle may sometimes comprise two electric motors providing input power to drive the wheel axle. A transmission is provided for converting torque produced by the electric motor(s).

An electric powertrain for an electric heavy-duty vehicle typically needs to be compact to provide enough space for batteries and other components, such as bodybuilders and aerodynamic devices e.g., air flow tunnels and similar. Furthermore, it needs to provide a wide range of gear reduction ratios to ensure startability as well as efficiency at cruising speeds. For an electric vehicle having a high gross combination weight (GCW), the wide range of gear reduction ratios needed may lead to problems with too large steps between available gear ratios when a three-speed transmission is used, such as is common in E-axles.

The electric powertrain according to the present disclosure is configured to provide at least four gear ratios to ensure startability as well as energy efficiency at cruising speeds for a heavy-duty vehicle.

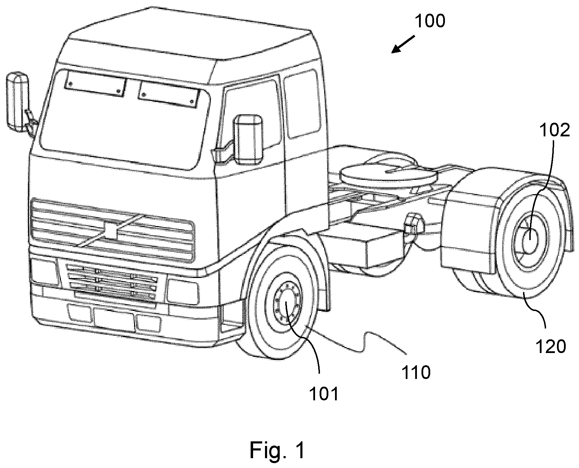

**FIG. 1** schematically illustrates an exemplary vehicle 100 according to an example.

The vehicle 100 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc.

The vehicle 100 is an electric vehicle comprising a non-driven front axle 101 and a driven rear axle 102. In other examples, the front axle may be a driven axle and the rear axle may be a non-driven axle, or both axles may be driven axles. Furthermore, the vehicle may comprise more than two axles, of which one or more may be driven. A pair of driven wheels 120 is provided on the rear axle 102 and a pair of non-driven wheels 110 is provided on the front axle 101. In other examples, other types of ground engaging members may be used instead of wheels, such as crawlers.

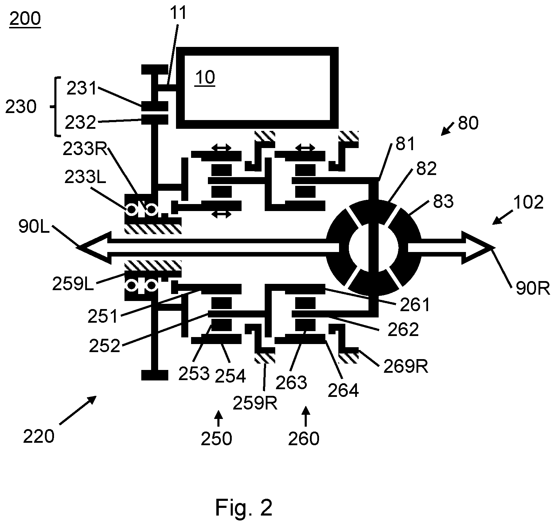

**FIG. 2** illustrates an electric powertrain 200 for a vehicle, such as the vehicle 100, according to a first example. The powertrain 200 comprises a first electric machine 10, a transmission 220, and a driven axle 102 comprising a first drive shaft 90L and a second drive shaft 90R coaxial with the first drive shaft 90L. A differential gear set 80 is provided for distributing torque between the first and second drive shafts 90L, 90R.

The transmission 220 comprises a primary reduction gear set 230, a first planetary gear system 250, and a second planetary gear system 260. The primary reduction gear set 230 is configured to drivingly connect the first electric machine 10 to the first planetary gear system 250. For this purpose, the primary reduction gear set 230 comprises a first pinion 231 arranged on and rotationally connected to an output shaft 11 of the first electric machine 10. The first pinion 231 is arranged in meshing engagement with a primary reduction gearwheel 232. Bearings 233L, 233R, such as roller bearings, are provided for mounting of the primary reduction gearwheel 232 rotatable relative to a fixed member 259L of the transmission 220, such as a housing.

The first and second planetary gear systems 250, 260 as well as the primary reduction gearwheel 232 are coaxial with the drive shafts 90L, 90R. The output shaft 11 of the first electric machine 10 is parallel with the drive shafts 90L, 90R, but offset therefrom in a transverse direction of the transmission 220. As measured along an axial direction defined by the drive shafts 90L, 90R, the first electric machine 10 axially overlaps with at least one of the planetary gear systems 250, 260. A cross-sectional normal plane taken through the first planetary gear system 250 would pass through a stator of the first electric machine 10.

The first planetary gear system 250 comprises a first sun gear 251, a first ring gear 254, and a first planet gear carrier 252 carrying a first set of planet gears 253. The second planetary gear system 260 is axially separated from the first planetary gear system 250 and comprises a second sun gear 261, a second ring gear 264, and a second planet gear carrier 262 carrying a second set of planet gears 263. The second sun gear 261 is rotationally connected to the first planet gear carrier 252.

The first planetary gear system 250 is shiftable to any one of at least two gear states, including two different gear states with reducing gear ratios. The second planetary gear system 260 is shiftable to any one of a total of two gear states, including one gear state with a direct gear ratio and one gear state with a reducing gear ratio. Hence, a total of at least four gear states are provided.

The first sun gear 251 is rotationally connectable to the primary reduction gearwheel 232. It is further engageable to the fixed member 259L of the transmission 220, such as to the housing. For this purpose, it is configured to be axially movable between a first engaged position (to the left in FIG. 2) in which it engages the fixed member 259L, and a second engaged position (to the right) in which it engages the primary reduction gearwheel 232. In other examples, at least one sleeve may be provided for engaging the first sun gear 251 to the fixed member 259L and/or the primary reduction gearwheel 232, respectively. A first actuator may be provided for shifting of the first sun gear 251.

The first ring gear 254 is engageable to a fixed member 259R, such as to the housing of the transmission 220. The first ring gear 254 is further rotationally connectable to the primary reduction gearwheel 232. It is configured to be axially movable between a first engaged position (to the right) in which it engages the fixed member 259R, and a second engaged position (to the left) in which it engages the primary reduction gearwheel 232. A second actuator may be provided for shifting of the first ring gear 254.

The second ring gear 264 is rotationally connectable to the first planet gear carrier 252. The second ring gear 264 is also engageable to a fixed member 269R, such as to the housing of the transmission 220. It is configured to be axially movable between a first engaged position (to the right) in which it engages the fixed member 269R, and a second engaged position (to the left) in which it engages the first planet gear carrier 252. A third actuator may be provided for shifting of the second ring gear 264.

The differential gear set 80 comprises a differential planet carrier 81, a set of differential planet gearwheels 82 and a set of differential output gearwheels 83. The second planet gear carrier 262 is rotationally connected to the differential planet carrier 81.

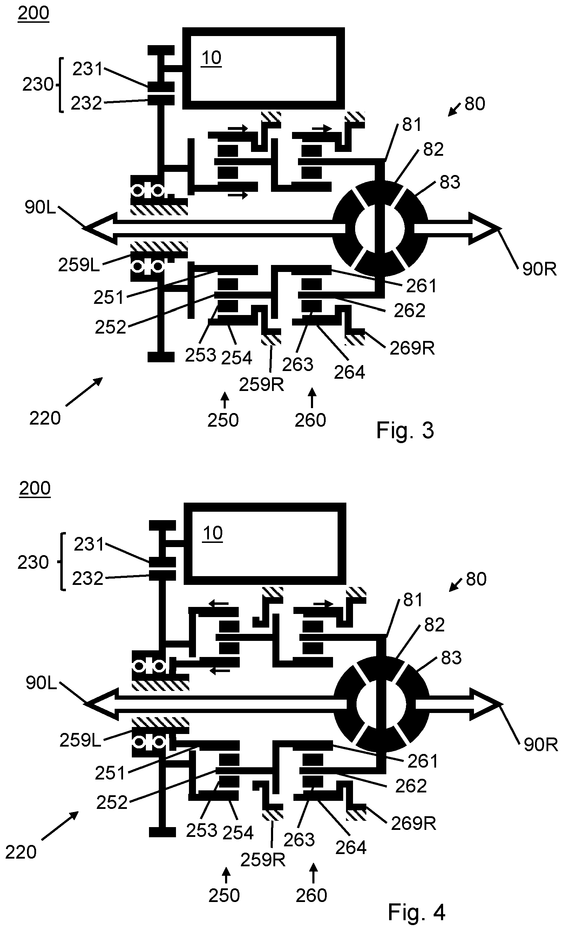

Four gear states of the transmission 220 of the first example are illustrated in **FIGS. 3-6****.** The four gear states are in the first example achieved by shifting of the first sun gear 251, the first ring gear 254, and the second ring gear 264. The second sun gear 261 is not shiftable.

**FIG. 3** illustrates the transmission 220 in a first gear state, suitable for starting of the vehicle 100 since it provides a relatively large gear ratio. In the first gear state, the first ring gear 254 is engaged to the fixed member 259R of the transmission 220, the first sun gear 251 is engaged to the primary reduction gearwheel 232, and the second ring gear 264 is engaged to the fixed member 269R. Torque generated by the first electric machine 10 is transferred to the drive shafts 90L, 90R via the primary reduction gear set 230, the first sun gear 251, the first planet gears 253, the first planet gear carrier 252, the second sun gear 261, the second planet gears 263, the second planet gear carrier 262, and the differential gear set 80.

**FIG. 4** illustrates the transmission 220 in a second gear state, providing a smaller gear ratio than the first gear state. In the second gear state, the first ring gear 254 is engaged to the primary reduction gearwheel 232, the first sun gear 251 is engaged to the fixed member 259L, and the second ring gear 264 is engaged to the fixed member 269R. Torque is transferred over the two planetary gear systems 250, 260 via the first ring gear 254, the first planet gears 253, the first planet gear carrier 252, the second sun gear 261, the second planet gears 263, and the second planet gear carrier 262.

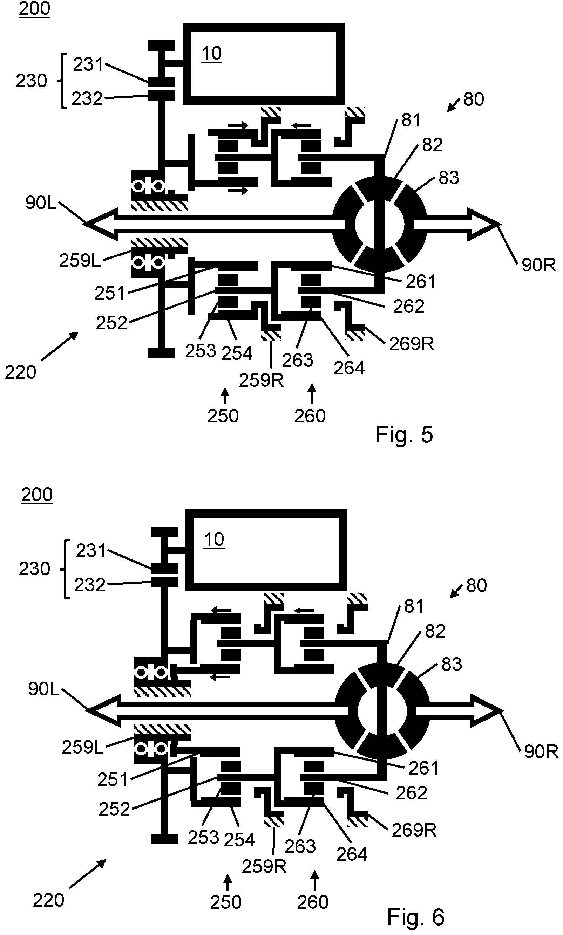

**FIG. 5** illustrates the transmission 220 in a third gear state, providing a smaller gear ratio than the second gear state. In the third gear state, the first ring gear 254 is engaged to the fixed member 259R, the first sun gear 251 is engaged to the primary reduction gearwheel 232, and the second ring gear 264 is engaged to the first planet gear carrier 252 and, consequently, to the second sun gear 261. Hence, the second planetary gear system 260 is locked in common rotation such that a direct gear ratio is provided over the second planetary gear system 260. Torque is transferred over the two planetary gear systems 250, 260 via the first sun gear 251, the first planet gears 253, the first planet gear carrier 252, and the locked second planetary gear system 260.

**FIG. 6** illustrates the transmission 220 in a fourth gear state, providing a smaller gear ratio than the third gear state. The fourth gear state is suitable for cruising speeds. In the fourth gear state, the first ring gear 254 is engaged to the primary reduction gearwheel 232, the first sun gear 251 is engaged to the fixed member 259L, and the second ring gear 264 is engaged to the first planet gear carrier 252 and, consequently, to the second sun gear 261. Torque is transferred over the two planetary gear systems 250, 260 via the first ring gear 254, the first planet gears 253, the first planet gear carrier 252, the second ring gear 264, and the locked second planetary gear system 260.

Hence, in the third and fourth gear states, suitable for relatively high vehicle speeds, torque is transmitted at a direct gear ratio over the second planetary gear system 260. Power losses are thereby minimized over the second planetary gear system 260. By using the first ring gear 254 for torque transfer in the fourth gear state, power losses over the first planetary gear system 250 will also be relatively small.

It is possible, but not necessary, to provide a fifth gear state in which both planetary gear systems 250, 260 are locked such that torque is transferred at a direct gear ratio from the primary reduction gearwheel 232 to the differential gear set 80. However, this increases the demands on lubrication of the transmission 220 and it may therefore be advantageous when only one of the planetary gear systems is configured to be selectively rotationally locked to provide a direct gear ratio. Moreover, to obtain a desired total speed reduction from the electric machine 10 to the drive shafts 90L, 90R without having to make the primary gearwheel 232 excessively large and negatively affect ground clearance, it may be beneficial to reduce the speed in two steps: a first step over the primary reduction gear set 230, and a second step over one of the planetary gear systems 250, 260. If desired, in order to prevent rotational locking of the first planetary gear system 250, an interlock mechanism may be provided that prevents simultaneous engagement of the first sun gear 251 and the first ring gear 254 to the primary reduction gearwheel 232, such as by preventing the first and second actuators from simultaneously moving the first sun gear 251 and the first ring gear 254 to their respective second engaged positions. In other examples, an electronic controller used to control the actuators may be configured such that simultaneous engagement is prevented.

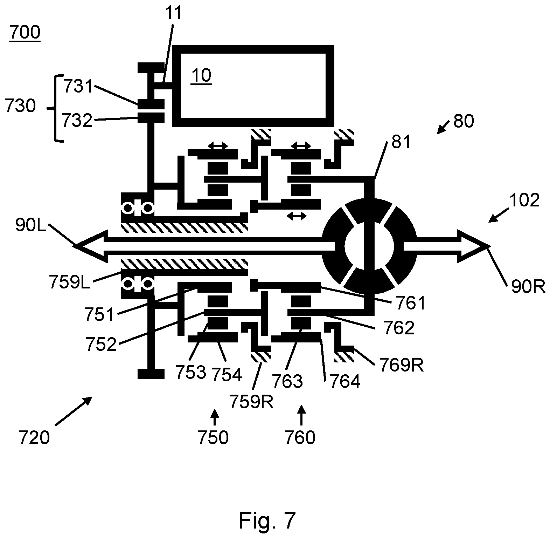

**FIG. 7** illustrates an electric powertrain 700 for a vehicle, such as the vehicle 100, according to a second example. It differs from the first example illustrated in FIG. 2 in the configuration of the transmission 720.

The transmission 720 comprises a primary reduction gear set 730, a first planetary gear system 750, and a second planetary gear system 760. The primary reduction gear set 730 is configured to drivingly connect the first electric machine 10 to the first planetary gear system 750 via a first pinion 731 and a primary reduction gearwheel 732, in the same way as in the first example. The first and second planetary gear systems 750, 760 as well as the primary reduction gearwheel 732 are coaxial with the drive shafts 90L, 90R.

The first planetary gear system 750 comprises a first sun gear 751, a first ring gear 754, and a first planet gear carrier 752 carrying a first set of planet gears 753. The second planetary gear system 760 comprises a second sun gear 761, a second ring gear 764, and a second planet gear carrier 762 carrying a second set of planet gears 763. The second sun gear 761 and the second ring gear 764 are both individually rotationally connectable to the first planet gear carrier 752.

The first planetary gear system 750 is shiftable to any one of a total of two gear states, including one gear state with a direct gear ratio and one gear state with a reducing gear ratio. The second planetary gear system 760 is shiftable to any one of at least two gear states, including two different gear states with reducing gear ratios. Hence, a total of at least four gear states are provided.

The first sun gear 751 is rotationally connected to the primary reduction gearwheel 232. The second planet gear carrier 762 is rotationally connected to the differential planet carrier 81.

The first ring gear 754 is engageable to a fixed member 759R, such as to the housing of the transmission 720. The first ring gear 754 is further rotationally connectable to the primary reduction gearwheel 732. It is configured to be axially movable between a first engaged position (to the right in FIG. 7) in which it engages the fixed member 759R, and a second engaged position (to the left) in which it engages the primary reduction gearwheel 732.

The second sun gear 761 is rotationally connectable to the first planet gear carrier 752. It is further engageable to a fixed member 759L of the transmission 720, such as to a housing. For this purpose, it is configured to be axially movable between a first engaged position (to the left) in which it engages the fixed member 759L, and a second engaged position (to the right) in which it engages the first planet gear carrier 752.

The second ring gear 764 is rotationally connectable to the first planet gear carrier 752. The second ring gear 764 is also engageable to a fixed member 769R, such as to the housing of the transmission 720. It is configured to be axially movable between a first engaged position (to the right) in which it engages the fixed member 769R, and a second engaged position (to the left) in which it engages the first planet gear carrier 752.

Four gear states are in the second example achieved by shifting of the first ring gear 754, the second sun gear 761, and the second ring gear 764. The first sun gear 751 is not shiftable.

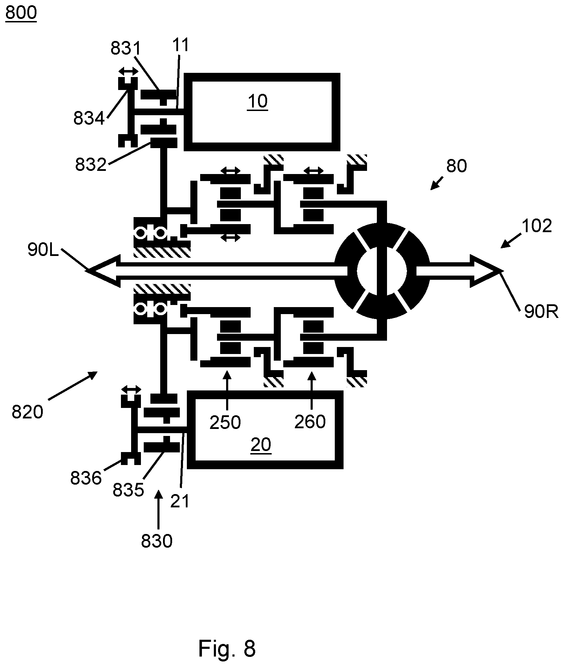

**FIG. 8** illustrates an electric powertrain 800 according to a third example. It comprises a transmission 820 which is similar to the first example illustrated in FIGS. 2-6 in that the configurations of the first and second planetary gear systems 250, 260, the differential gear set 80, and the driven axle 102, are identical to the first example. Hence, no details regarding these components will be discussed. The powertrain 800 according to the third example differs from the first and second examples in that it comprises a second electric machine 20 in addition to the first electric machine 10, and in the configuration of the primary reduction gear set 830. The second electric machine 20 has an output shaft 21 which is parallel to, and offset from, the output shaft 11 of the first electric machine 10 as well as the drive shafts 90L, 90R.

The primary reduction gear set 830 is configured to selectively drivingly connect one or both of the first electric machine 10 and the second electric machine 20 to the first planetary gear system 250. The first pinion 831, arranged on the output shaft 11 of the first electric machine 10, is rotationally connectable to the output shaft 11 by means of a clutch 834 movable between a disengaged position and an engaged position. Similarly, a second pinion 835, arranged on the output shaft 21 of the second electric machine 20, is rotationally connectable to the output shaft 21 by means of a clutch 836 movable between a disengaged position and an engaged position. Both the first and the second pinions 831, 835 are arranged in meshing engagement with the primary reduction gearwheel 832. Instead of clutches, the pinions 831, 835 may be arranged to be movable in the axial direction to engage and disengage the electric machines 10, 20, respectively.

The pinions 831, 835 can have the same numbers of gear teeth, or different numbers of gear teeth. Separate actuators may be provided for actuating the clutches 834, 836.

Of course, the primary reduction gear set 830 of the third example may be combined with the planetary gear systems 750, 760 of the second example illustrated in FIG. 7. Moreover, a powertrain comprising a single first electric machine 10 may comprise a clutch for disengaging the electric machine from the transmission in the same way as in the third example. It is also possible to provide a powertrain with two electric machines that are both permanently rotationally connected to the transmission, in the same way as the first electric machine in the first and second examples.

In some examples, the driven axle may comprise a single drive shaft, in which case the differential gear set may be omitted. For example, the vehicle may be provided with one electric powertrain per driven wheel.

In the following, a list of numbered examples of the disclosure is presented.

Example 1: An electric powertrain for a vehicle (100), comprising at least a first electric machine (10), a transmission (220, 720, 820), and a driven axle (102) comprising at least a first drive shaft (90L), the transmission (220, 720, 820) comprising:
- a first planetary gear system (250, 750) comprising a first sun gear (251, 751), a first ring gear (254, 754), and a first planet gear carrier (252, 752) carrying a first set of planet gears (253, 753),
- a second planetary gear system (260, 760) comprising a second sun gear (261, 761), a second ring gear (264, 764), and a second planet gear carrier (262, 762) carrying a second set of planet gears (263, 763), wherein at least one of the second sun gear (261, 761) and the second ring gear (264, 764) is rotationally connected to, or rotationally connectable to, the first planet gear carrier (252, 752),
- a primary reduction gear set (230, 730, 830) configured to drivingly connect the first electric machine (10) to the first planetary gear system (250, 750), the primary reduction gear set comprising a first pinion (231, 731, 831) arranged in meshing engagement with a primary reduction gearwheel (232, 732, 832), wherein one of the first and second planetary gear systems (250, 760) is shiftable to any one of at least two gear states, including two different gear states with reducing gear ratios, and wherein the other one of the first and second planetary gear systems (260, 750) is shiftable to any one of two gear states, including one gear state with a direct gear ratio and one gear state with a reducing gear ratio, wherein the primary reduction gearwheel (232, 732, 832) and the first and second planetary gear systems (250, 750; 260, 760) are coaxial with the first drive shaft (90L).

Example 2: The electric powertrain of Example 1, wherein each one of the first and second ring gears (254, 754; 264, 764) is engageable to a fixed member (259R, 759R; 269R, 769R) of the transmission.

Example 3: The electric powertrain of Example 2, wherein the first ring gear (254, 754) is further rotationally connectable to the primary reduction gearwheel (232, 732, 832).

Example 4: The electric powertrain of Example 3, wherein the first ring gear (254, 754) is configured to be axially movable between a first engaged position in which it engages the fixed member (259R, 759R), and a second engaged position in which it engages the primary reduction gearwheel (232, 732, 832).

Example 5: The electric powertrain of any one of Examples 2-4, wherein the second ring gear (264, 764) is further rotationally connectable to the first planet gear carrier (252, 752).

Example 6: The electric powertrain of Example 5, wherein the second ring gear (264, 764) is configured to be axially movable between a first engaged position in which it engages the fixed member (269R, 769R), and a second engaged position in which it engages the first planet gear carrier (252, 752).

Example 7: The electric powertrain of any one of the preceding Examples, wherein one of the first and second sun gears (251, 761) is engageable to a fixed member (259L, 759L) of the transmission, and wherein the other one of the first and second sun gears (261, 751) is rotationally connected to another component (252, 732) of the transmission.

Example 8: The electric powertrain of any one of the preceding Examples, wherein the first sun gear (251) is rotationally connectable to the primary reduction gearwheel (232), and wherein the first sun gear (251) is further engageable to a fixed member (259L) of the transmission.

Example 9: The electric powertrain of Example 8, wherein the first sun gear (251) is configured to be axially movable between a first position in which it engages the fixed member (259L), and a second position in which it engages the primary reduction gearwheel (232).

Example 10: The electric powertrain of any one of the preceding Examples, wherein the second sun gear (261) is rotationally connected to the first planet gear carrier (252).

Example 11: The electric powertrain of the preceding Examples, wherein the transmission (220, 720, 820) is shiftable to one of at least four gear states with different gear ratios.

Example 12: The electric powertrain of Example 11, wherein the at least four gear states comprise:
- a first gear state in which the first ring gear (254) is engaged to a fixed member (259R) of the transmission, the first sun gear (251) is engaged to the primary reduction gearwheel (232), and the second ring gear (264) is engaged to the fixed member (269R),
- a second gear state in which the first ring gear (254) is engaged to the primary reduction gearwheel (232), the first sun gear (251) is engaged to the fixed member (259L), and the second ring gear (264) is engaged to the fixed member (269R),
- a third gear state in which the first ring gear (254) is engaged to the fixed member (259R), the first sun gear (251) is engaged to the primary reduction gearwheel (232), and the second ring gear (264) is engaged to the first planet gear carrier (252), and
- a fourth gear state in which the first ring gear (254) is engaged to the primary reduction gearwheel (232), the first sun gear (251) is engaged to the fixed member (259L), and the second ring gear (264) is engaged to the first planet gear carrier (252).

Example 13: The electric powertrain of any one of the preceding Examples, wherein only one of the planetary gear systems (260, 750) is configured to be selectively rotationally locked to provide a direct gear ratio.

Example 14: The electric powertrain of any one of the preceding Examples, wherein the first pinion (231, 731, 831) is arranged on an output shaft (11) of the first electric machine (10).

Example 15: The electric powertrain of Example 14, wherein the first pinion (831) is rotationally connectable to the output shaft (11) of the first electric machine (10).

Example 16: The electric powertrain of any one of the preceding Examples, wherein an output shaft (11) of the first electric machine (10) is parallel with the first drive shaft (90L).

Example 17: The electric powertrain of any one of the preceding Examples, wherein the driven axle (120) further comprises:
- a second drive shaft (90R) coaxial with the first drive shaft (90L), and
- a differential gear set (80) configured to distribute torque to the first and second drive shafts (90L, 90R).

Example 18: The electric powertrain of Example 17, wherein the second planet gear carrier (262, 762) is rotationally connected to a differential planet carrier (82) of the differential gear set (80).

Example 19: The electric powertrain of any one of the preceding Examples, further comprising a second electric machine (20) being drivingly connected to, or drivingly connectable to, the first planetary gear system (250) via a second pinion (835) arranged in meshing engagement with the primary reduction gearwheel (832).

Example 20: A vehicle (100) comprising the electric powertrain (200, 700, 800) according to any of the preceding Examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric powertrain (200, 700, 800) for a vehicle (100), comprising at least a first electric machine (10), a transmission (220, 720, 820), and a driven axle (102) comprising at least a first drive shaft (90L), the transmission (220, 720, 820) comprising:
- a first planetary gear system (250, 750) comprising a first sun gear (251, 751), a first ring gear (254, 754), and a first planet gear carrier (252, 752) carrying a first set of planet gears (253, 753),
- a second planetary gear system (260, 760) comprising a second sun gear (261, 761), a second ring gear (264, 764), and a second planet gear carrier (262, 762) carrying a second set of planet gears (263, 763), wherein at least one of the second sun gear (261, 761) and the second ring gear (264, 764) is rotationally connected to, or rotationally connectable to, the first planet gear carrier (252, 752),
- a primary reduction gear set (230, 730, 830) configured to drivingly connect the first electric machine (10) to the first planetary gear system (250, 750), the primary reduction gear set comprising a first pinion (231, 731, 831) arranged in meshing engagement with a primary reduction gearwheel (232, 732, 832),
wherein one of the first and second planetary gear systems (250, 760) is shiftable to any one of at least two gear states, including two different gear states with reducing gear ratios, and
wherein the other one of the first and second planetary gear systems (260, 750) is shiftable to any one of two gear states, including one gear state with a direct gear ratio and one gear state with a reducing gear ratio,
wherein the primary reduction gearwheel (232, 732, 832) and the first and second planetary gear systems (250, 750; 260, 760) are coaxial with the first drive shaft (90L).

2. The electric powertrain of claim 1, wherein each one of the first and second ring gears (254, 754; 264, 764) is engageable to a fixed member (259R, 759R; 269R, 769R) of the transmission.

3. The electric powertrain of claim 2, wherein the first ring gear (254, 754) is further rotationally connectable to the primary reduction gearwheel (232, 732, 832).

4. The electric powertrain of claim 3, wherein the first ring gear (254, 754) is configured to be axially movable between a first engaged position in which it engages the fixed member (259R, 759R), and a second engaged position in which it engages the primary reduction gearwheel (232, 732, 832).

5. The electric powertrain of any one of claims 2-4, wherein the second ring gear (264, 764) is further rotationally connectable to the first planet gear carrier (252, 752).

6. The electric powertrain of claim 5, wherein the second ring gear (264, 764) is configured to be axially movable between a first engaged position in which it engages the fixed member (269R, 769R), and a second engaged position in which it engages the first planet gear carrier (252, 752).

7. The electric powertrain of any one of the preceding claims, wherein the first sun gear (251) is rotationally connectable to the primary reduction gearwheel (232), and wherein the first sun gear (251) is further engageable to a fixed member (259L) of the transmission.

8. The electric powertrain of claim 7, wherein the first sun gear (251) is configured to be axially movable between a first engaged position in which it engages the fixed member (259L), and a second engaged position in which it engages the primary reduction gearwheel (232).

9. The electric powertrain of any one of the preceding claims, wherein the second sun gear (261) is rotationally connected to the first planet gear carrier (252).

10. The electric powertrain of the preceding claims, wherein the transmission (220, 720, 820) is shiftable to one of at least four gear states with different gear ratios.

11. The electric powertrain of claim 10, wherein the at least four gear states comprise:
- a first gear state in which the first ring gear (254) is engaged to a fixed member (259R) of the transmission, the first sun gear (251) is engaged to the primary reduction gearwheel (232), and the second ring gear (264) is engaged to the fixed member (269R),
- a second gear state in which the first ring gear (254) is engaged to the primary reduction gearwheel (232), the first sun gear (251) is engaged to the fixed member (259L), and the second ring gear (264) is engaged to the fixed member (269R),
- a third gear state in which the first ring gear (254) is engaged to the fixed member (259R), the first sun gear (251) is engaged to the primary reduction gearwheel (232), and the second ring gear (264) is engaged to the first planet gear carrier (252), and
- a fourth gear state in which the first ring gear (254) is engaged to the primary reduction gearwheel (232), the first sun gear (251) is engaged to the fixed member (259L), and the second ring gear (264) is engaged to the first planet gear carrier (252).

12. The electric powertrain of any one of the preceding claims, wherein only one of the planetary gear systems (260, 750) is configured to be selectively rotationally locked to provide a direct gear ratio.

13. The electric powertrain of any one of the preceding claims, wherein an output shaft (11) of the first electric machine (10) is parallel with the first drive shaft (90L).

14. The electric powertrain of any one of the preceding claims, further comprising a second electric machine (20) being drivingly connected to, or drivingly connectable to, the first planetary gear system (250) via a second pinion (835) arranged in meshing engagement with the primary reduction gearwheel (832).

15. A vehicle (100) comprising the electric powertrain (200, 700, 800) according to any of the preceding claims.
